# EUROPEAN PATENT SPECIFICATION

(11) **EP 2 137 665 B1**
(45) Date of publication and mention of the grant of the patent: **20.03.2013**
(21) Application number: 07856597.5
(22) Date of filing: 12.12.2007
(51) Int. Cl.: G06F 21/35, G06F 21/44

(54) **AUTHENTICATION METHOD AND TOKEN USING SCREEN LIGHT FOR BOTH COMMUNICATION AND POWERING**
SCHIRMLICHT SOWOHL FÜR KOMMUNIKATION ALS AUCH BESTROMUNG VERWENDENDES AUTHENTIFIZIERUNGSVERFAHREN UND TOKEN
PROCÉDÉ D'AUTHENTIFICATION, ET JETON D'AUTHENTIFICATION UTILISANT LA LUMIÈRE D'UN ÉCRAN À LA FOIS POUR LA COMMUNICATION ET POUR L'ALIMENTATION ÉLECTRIQUE

(30) Priority: 07.03.2007 IT MI20070453
(43) Date of publication of application: 30.12.2009
(73) Proprietor: C-Sigma S.R.L., 23900 Lecco (IT); Korotek S.R.L., 20038 Seregno (IT)
(72) Inventor: GHISLANZONI, Luca, I-23900 Lecco (IT)
(86) International application number: PCT/EP2007/010849
(87) International publication number: WO 2008/107008

(56) References cited:
- EP-A- 1 255 178
- WO-A-00/48064
- US-A- 4 819 267
- US-A- 4 978 840
- US-A- 5 432 851

## Description

The present invention describes a method and an apparatus to authenticate a user's identity, for gaining access to sensitive data and-or applications in a secure way, but without the need to insert the device into readers of any sort. Typical applications would for example be: internet remote shopping, remote home-banking and financial transactions, access to virtual private networks (VPNs), etc.

In a very useful embodiment, the apparatus would be integrated into a conventional credit card, as to enhance security while using said credit card for payment authorisation.

Several devices, known as authentication tokens, are commercially available which already feature similar functions, although obtained by other means. In particular, RSA Security Inc. and TRI-D Systems Inc. offer authentication tokens which generate One Time Passwords (OTPs), typically displayed on a Liquid Crystal Display (LCD), for authenticating a user identity when the user initiates a session to connect to a secure server from a client application. Existing authentication tokens generate OTPs in various ways. A very common way, herewith called "Current Time Encryption", consists in encrypting the token's clock 64-bit standard ISO representation of Current Time, by means of a token specific true Random Seed and a token specific Salt (practically a serial number), both known also to the secure server the client is trying to gain access to, to then generate a OTP every about 60 seconds (an example is the SecurID® token from RSA Security Inc.). By entering said OTP on the login page, the user identity is then verified at the secure server side. The server would then include procedures to correct for token's clocks running slower or faster than its own Current Time clock.

Another known way, herewith called "Challenge Code Encryption" would make use of a keypad on the authentication token itself, and by means of which a user can enter a one time Challenge Code sent by the server and displayed, for example, on the login page of the service the user is trying to gain access to. The token then encrypts said Challenge Code with a token specific true "Random Seed" and a token specific Salt, both also known to the secure server that the client is trying to gain access to, displaying then the resulting OTP on the LCD. By entering said OTP on the login page, the user identity is then verified at the secure server side.

Finally, yet another method would get away with the need for encryption algorithms at the token's side by simply storing in the token's EEPROM a lookup table containing several random OTPs, known only to the server and the token itself. At each login the server would then ask for the OTP stored at location x, which the token will then readily display.

The method and device disclosed by this patent can be used to implement "Current Time Encryption" and-or "Challenge Code Encryption" and-or "OTPs Table" types of authentication, whatever the choice of the detailed encryption algorithm. A typical embodiment would consist in a credit card size token, featuring on one side an array of solar cells (for example of the photovoltaic type), and on the other side a display device (ideally, of a thin and flexible type). After a user has entered the user ID, for example Alice, on the login page, the server displays a Challenge Code (or Current Time for the "Current Time Encryption" method), encoded in a sequence of bright and dark rectangles, which are then shown in an area of the screen approximately the size of a credit card. Alice can then lay the credit card size token against said image. The image light output is then sufficient to generate the energy required to power the Micro Processing Unit, MPU, contained within Alice's token, while at the same time the variations in the solar cells array output signal are processed by said MPU to decode the Challenge Code (or Current Time) sent by the server. Encrypting it together with the stored Random Seed and Salt, the MPU can then generate the OTP expected by the server.

To verify whether such method was already covered by existing patents, a world-wide search was carried out in major patents databases, yielding the following results:
- PCT/US2004/004366 (referred to as D1, "Portable Acess Device", Bloomberg LP, February 13, 2004, discloses (Fig. 6) a portable access device capable of reading, by means of photosensors, modulated light signals from a computer monitor.
- EP-A-1 255 178 (referred here as D2), "Dispositif de sécurité pour transaction en ligne", Berner Fachhochschule, November 6, 2002, discloses a smart card format device for reading and decoding a matrix of black and white dots displayed on a computer monitor.
- US patent 5,777,903 (referred here as D3), "Solar Cell Powered Smart Card with Integrated Display and Interface Keypad", Motorola Inc., July 7, 1998, discloses a smart card including a MPU, a display, a keypad, an interface for signals exchange with an external system, and photovoltaic cells for providing power.
- US patent 4,916,296 (referred here as D4), "Light Modulating Smart Card", D.A. Streck, April 10, 1990, discloses a smart card in one version of which, "solar cell(s) carried by the smart card convert light incident thereon into power for the card. In a variation thereof, there is a light splitter for splitting the beam of light into a portion directed on the solar cell(s) for producing power and a portion directed through the light modulator."
- US patent 4,978,840 (referred here as D5), "IC Card Having Energy Input and Data Exchange Elements on Opposite Sides Thereof", T. Anegawa, December 18, 1990, discloses an IC Card featuring one main surface with solar cells to generate power, and the other main surface with semiconductor photo-elements for contactless data exchange with an external reader.
- US patent 3,971,916 (referred here as D6), "Methods of Data Storage and Data Storage Systems", R. Moreno, July 27, 1976, discloses a card whereby "Coupling of the card and data-transfer means is effected optically by light-emitting diodes cooperating with photovoltaic piles, or by direct electrical contact".

The device described in D1, although capable of decoding light modulated signals conveyed by images displayed on a PC monitor, it does so thanks to photosensors, still requiring the use of a battery for powering the signal conditioning and processing electronics.

The device disclosed in D2 is capable to decode a signal conveyed by means of a spatial pattern of black and white dots displayed on a computer monitor. Although such device might be very fast in reading said signal (it is a sort of parallel transmission of several bits), requiring the use of several photo-sensor elements, with the corresponding individual wiring, signal conditioning circuitry, and input pins at the MPU side, it is likely to be very expensive for manufacturing. Concerning the device described in D3, although D3 does not explicitly mention this possibility, such type of Smart Card could indeed also be used for "Challenge Code Encryption" type of authentications. Alice would digit on the card's keypad a "Challenge Code", as displayed by the server on the login page, the MPU would then generate a OTP, which Alice would enter on said login page. However, most users would find simpler to lay a card against a rectangular image on the screen and just wait for the OTP to be generated and displayed on said card's display device, rather than type entries on a necessarily very small keypad. Furthermore, embedding a keypad in a credit card size device increases its manufacturing complexity, affecting cost and long term reliability.

D4, D5, and D6, all describe cards whereby optical means are used for both supplying energy to the card's circuitry, as well as for establishing data communication paths. However, for card interrogation and-or data exchange, they all require the card to be inserted in a suitable card reader specific to that particular type of card.

The present invention, instead, obtains similar capabilities by introducing a novel way to interrogate the authentication card, whereby the card is laid against an image on a computer screen, or other type of terminal, and whose time-varying light output is used both to supply energy to the card's internal circuitry, as well as to encode server's requests. A very convenient way to generate said time sequence of images would consist in merging into a standard GIF animation a sequence of white rectangles suitably interleaved with black rectangles, but other equally effective methods can easily be imagined by the skilled in the art. The great advantage of using a time sequence, as opposed to the spatial pattern used by D2, is the independence from the particular size and resolution of the computer monitor used (for example, with the widely used Microsoft Windows environment, a user can select different screen resolution settings, resulting in the same image being displayed at different scales, so that a method, such as the one described in D2, requiring the user to accurately position the token relatively to the screen, might result in a complex practical implementation). Indeed, with our prototype we are capable of correct operation even when holding it at several centimetres from the monitor.

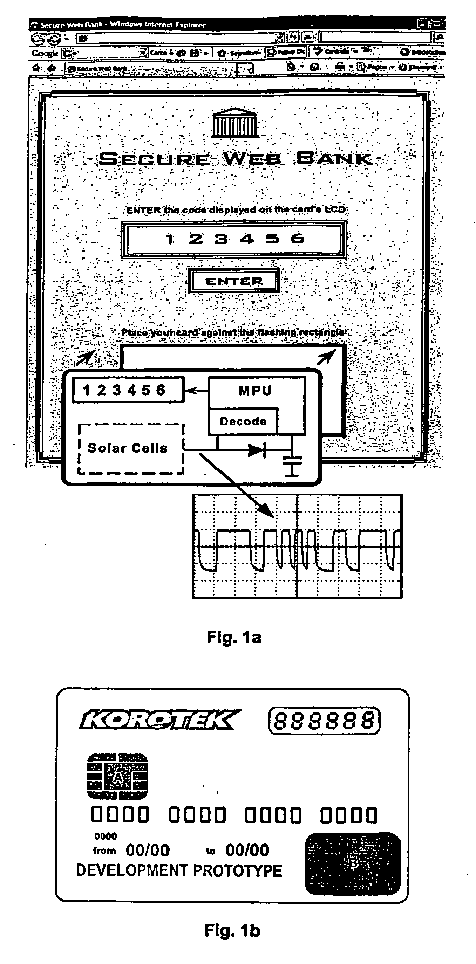

The inventive step of this invention is exemplified in Figure la, whereas Figure 1b depicts a practical example of how the token could be arranged for integration into a conventional credit card with smart chip (A). The shaded area B highlights one of the many possible location for mounting the solar cell(s) (to obtain a voltage level suitable for the supply of conventional MPUs, several photo-voltaic cells would typically need to be connected in series, and in the following such series connection will be referred to as "array of solar cells"), and refers to an array mounted on the side of the card opposite to the one from which the display device can be read. Let us take the example of Alice connecting to a home banking service:
- following a conventional procedure, the home banking service would ask for Alice's User ID, which Alice would enter to gain access to a login page of the kind shown in Figure 1a.
- On said page an area of approximately the size of a credit card displays a rapid time sequence of bright images interleaved by dark ones, in a suitable way to encode the "Current Time" as broadcasted by the server (typically, with updates about every minute), or to encode a suitably generated one-time "Challenge Code", that could also be periodically updated and broadcasted to all users, or could otherwise be specific to each user (depending on the details of the specific encryption algorithm utilised).
- On the token's side facing said screen area, an array of solar cells convert the image's light output in electric energy, while intensity variations in said light are of sufficient amplitude as to allow simple and reliable decoding of the server's request, as shown in the oscilloscope recording inserted at the bottom of Figure 1a (example obtained by recording the voltage output of a string of 4 cells of the type used in solar powered calculators, terminated on a suitable load)
- The solar cells output is also used to recharge an energy storage element, such as for example the capacitor drawn in figure 1a, by means of suitable energy conditioning circuitry (schematically represented as a diode in figure 1a).
- A Micro Processor Unit, MPU, can then draw its supply from said energy storage element, while a suitable DECODE interface circuitry, and associated software, allows decoding of the code embedded in the sequence of images.
- The MPU has now all the data needed for computing the OTP, which is then shown on the token's display device.
- Finally, Alice enters said OTP on the login page, gaining access to the required service.

It shall now be remarked that when using an encryption method based on a "Current Time" or "Challenge Code" common to all users, and periodically updated (for example every one minute or so), and whose encoding image is broadcasted on a TV channel, then secure home shopping for users without internet connection becomes possible (by dictating the OTP to the operator of the telephone number corresponding to that specific shopping or financial service).

The energy conditioning circuitry, schematically represented in figure 1a as a diode peak charging a capacitor, might indeed simply consist in a low drop Schottky rectifier, but more efficient and advanced solutions exist, and which are commonly known to the skilled in the art: MOSFET transistors driven as synchronous rectifiers, micropower switching mode boost converters capable to keep charging the energy storage element even at Vmin solar cells output, and all other obviously applicable solutions.

Suitable solar cells are commercially available, which are very thin and flexible, ideal characteristics for being integrated in credit card type of tokens. Computer screens and monitors can easily produce images with brightness in excess of 200 cd/m², so that less than about 4 cm² of total solar cells array area would typically generate sufficient energy. The skilled in the art can then figure out how to best connect the required number of solar cells, in conventional series and-or parallel configurations. Concerning the display device, several different technologies are nowadays available which allow the manufacturing of very thin and flexible displays.

A suitable micropower MPU would normally consume few tens of µW, requiring peaks of a couple of mW, lasting a couple of msec, only during EEPROM locations writing. Such peaks of energy demand can easily be buffered by a capacitor(s) totalling few µF, and which a suitable array of solar cells can recharge in less than one second of typical white screen light illumination. Naturally, the MPU would verify the amount of energy available (by monitoring the voltage across the storage capacitor) before starting any peak energy demanding task. The skilled in the art can therefore imagine several possible coding schemes producing a worst case total light output such as to always guarantee sufficient energy storage, while ensuring at the same time reliable and easy decoding. In particular, between two consecutive updates from the server, each coding sequence of bright and dark images could be repeated several times, or continuously, as to allow the MPU to verify multiple times the correct reading of the server's requests, while at the same time generating enough energy for the MPU needs. Of course, the dark image does not need to be pure black, but a best trade-off can be found by means of which:
- colour and brightness of the bright image are selected to match, as far as possible, the solar cell(s) spectral response, as to guarantee that energy output is maximised, even under worst case conditions.
- The dark image too could be optimised for colour and *relative* brightness (with respect to the bright image), as to guarantee reliable decoding while maximizing the total solar cell(s) energy output.

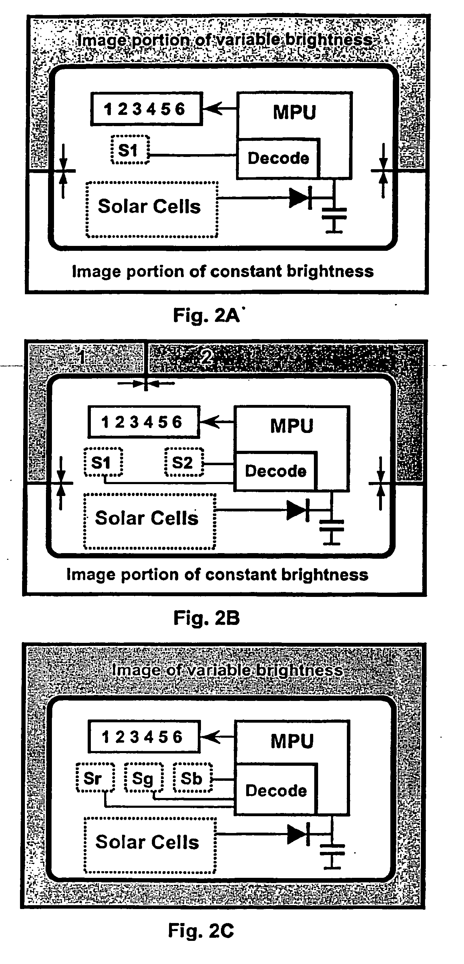

In a variation of the method, the modulations in brightness are detected by a separate photo sensing element (figure 2A), as to allow more flexibility in the detailed design of the coding scheme and of the circuitry for its decoding. A very convenient way to realise said photo sensing element could for example consist in reserving a fraction of the total area of the solar cells array as to obtain a very small cell dedicated to this purpose. With such a solution both said dedicated photo sensing cell and the larger array of solar cells will be illuminated by the very same sequence of bright and dark images (typically, a time sequence of white and black rectangles), but most of the light collecting area will be occupied by the array of cells which will be dedicated to the task to keep charged the bank of energy storage capacitors, while the photo sensing cell will be directly connected to an optimised decoding circuitry. Also in this case, the sequence of encoding images is purposely assembled as to guarantee that its total light output will be sufficient to keep properly charged said bank of energy storage capacitors.

In yet another variation of the method, multiple individual sensors could be tuned to detect different portions of the emission spectrum of the images in the coding sequence, so that data could be coded also into the colour information. In a particularly straightforward embodiment three sensing elements, Sr, Sg, Sb, as shown in figure 2B, one for each of the three fundamental colours, red, green, blue, would decode variations in the brightness of each colour to transfer more bits at each sampling.

A very convenient way to realise photo sensing elements sensitive to defined portions of the coding image emission spectrum could for example consist in reserving a fraction of the total area of the solar cells array as to obtain a number of small cells dedicated to this purpose. Each cell would then be covered by an optical filter (in practice a coloured film of transparent plastic material) tuned to that particular portion of the emission spectrum.

As above, also in this case said sequence of coloured encoding images is purposely assembled as to guarantee that its total light output will be sufficient to keep properly charged said bank of energy storage capacitors.

The token specific Random Seed and Salt could be programmed into the MPU at the manufacturing stage, or also later on by using a similar method as used for reading server's requests from the screen, but carried out on a secure terminal (for example a workstation at a secure location), before delivery of the token to the customer. Such programming terminals could be chosen of a particularly bright type, so that the higher rate of energy generated by the solar cells would allow to considerably speed up the programming time required for each token. In an embodiment by which the token is integrated in a conventional smart card, the programming could take place also by means of the already present electrical contacts. Concerning optimal coding schemes, no particular choice is detailed in this patent, as anyone skilled in the art can figure out several suitable solutions, and it would hence be too restrictive to bind the scope of this patent to a particular coding scheme.

Those skilled in the art will appreciate that several other useful features could be added, but which are of obvious derivation. An example is the possibility to implement software routines to provide the user with visual feedback on the token display device, such as the total number of times that the token has successfully decoded a "Current Time" or "Challenge Code", or the like. With a "Current Time" type of encryption, a very simple way to provide said visual feedback would consist in displaying the most recent value of date and time as soon as it is decoded by the token, and just before the OTP is generated, so that the user can directly verify whether the displayed date and time values are the correct ones, and not future values as phishing sites would attempt to broadcast in order to "steal" future values of a token's OTPs. After that, the last recorded date and time value could also be displayed each time sufficient light illuminates the array of solar cells. If the recording, in the MPU EEPROM, of the last decoded "Current Time" value is allowed only when said value corresponds to a more recent time with respect to the one currently stored, then the user could easily verify:
- whether token has been used, without the user knowing
- whether the token was temporarily removed, without the user knowing, by somebody who then exposed it to sequences of images encoding for future values of the "Current Time, as to later be able to use, at said dates and times, the "stolen" OTPs.

In the case of the "OTPs Table" method, after displaying the OTP, the corresponding EEPROM location can be deleted, and a counter updated, so that various ways can now be imagined for providing visual feedback to the user on whether somebody has temporarily taken possession of the token, without him knowing, and tried to "steal" the OTPs (or only some of them), by presenting to the token coded images consecutively asking for the stored OTPs.

Of course, if instead a "Challenge Code Encryption" approach is preferred, whereby the server, at each login, randomly generate user specific Challenge Codes, phishing attempts would not produce any practical result.

The inventive step of this invention shall be understood as independent from a particular choice for the encryption algorithm, or coding scheme for the sequence of images, or visual feedback method, rather it consists in the idea of using the light output from the screen displaying the relevant login page, to convey both the server's requests as well as the energy needed to supply the token.

It shall be appreciated that those skilled in the art, building on the features of the invention described above, now could easily imagine many changes, modifications, and-or substitutions. The following claims are intended to cover such changes as fall within the scope of the inventive step detailed in the above description.

## Claims

1. A contactless method to optically transfer server's requests to an authentication token, while at the same time supplying it with power, by means of the light emitted by portions of the screen, or monitor, displaying said server's login page;
**characterised in that** said method is arranged for
- sending a code by the server by means of a time sequence of a bright image alternating with a dark image, said time sequence encoding said code as variations in the corresponding screen light output;
- using an array of solar cells in the authentication token to convert said variations of the screen light output into a corresponding varying electric signal;
- decoding the varying electric signal to obtain an input code;
- using a Microprocessor Unit, MPU, which also includes a non volatile memory, to obtain a One Time Password, OTP, by applying an encryption method or by applying an OTP generation method using the obtained input code;
- displaying said One Time Password on a suitable display device of the authentication token, so as to allow the user to enter it on the server's login page;
- whereby the encoding time sequence of images is purposely arranged so as to guarantee that the corresponding light output is sufficient to generate, after its conversion by said array of solar cells, all the energy needed by the MPU for carrying out the required tasks.

2. Authentication token for participating in the method of claim 1 comprising:
- an array of solar cells adapted to convert time-varying brightness variations in a screen light output into a corresponding varying electric signal,
- a decoding circuitry adapted to decode said varying electric signal into an input code,
- a micro-processor unit (MPU) with non-volatile memory adapted to obtain a one time password (OTP) by applying an encryption method or by applying an OTP generation method based on an OTP table using the obtained input code,
- display means adapted to display said one time password,
- energy storage capacitors,
**characterized in that** all the energy needed by the micro-processor unit to carry out its required tasks is obtained by conversion of the variations of screen light output by the array of solar cells and **in that** the authentication token has a card shape and the array of solar cells is mounted on a side of the card meant to be exposed to the screen light output of time-varying brightness.

3. Authentication token according to claim 2 further **characterized in that** a photo sensing element is added on the same card side as the array of solar cells and wherein said photo sensing element is dedicated to the task of detecting the variations in the light emitted by the image of time-varying brightness encoding the requests from a server.

4. Authentication token according to claim 2 further **characterized in that** the photo sensing element consists of three photo sensing elements, each sensitive to one of three fundamental Red-Green-Blue colour components, each of these photo sensing elements detecting variations of the corresponding colour component in light emitted by the image of time-varying brightness.

5. Authentication token according to any of claims 2-4 further **characterized in that** it comprises user identification means for identifying the user to the card before starting the OTP generation process.

6. Authentication token according to claim 5 wherein the user identification means use biometric sensors.

7. Authentication token according to claim 5 wherein the user identification means use an on-card keypad

## Patentansprüche

1. Eine kontaktlose Methode, um Serveranforderungen optisch an ein Authentifizierungstoken zu übermittelt und es gleichzeitig durch das Licht, das portionsweise auf dem Bildschirm emittiert, mit Energie zu versorgen oder die besagte Login-Seite des Servers zu überwachen und anzuzeigen.
Folgende Charakteristiken sind in der besagten Methode enthalten:
- Einen Code des Servers in einer zeitlichen Abfolge in Form eines hellen Bildes in Abwechslung mit einem dunklen Bild in der besagten Zeitfolge zu senden, wobei die besagte zeitliche Abfolge die entsprechende Lichtausgabe des Bildschirms in Form von Variationen kodiert;
- Die Benutzung einer Anordnung von Solarzellen im Authentifizierungstoken, um die besagten Variationen der emittierten Lichtausgabe in ein entsprechend variierendes elektrisches Signal zu konvertieren;
- Die Decodierung des variierenden elektrischen Signals, um einen Eingabecode zu erhalten;
- Die Benutzung einer Mikroprozessoreinheit (MPU), die auch einen nichtflüchtigen Speicher enthält, um ein einmaliges Passwort (OTP) zu erhalten, indem ein Verschlüsselungsverfahren angewendet wird oder die OTP-Generierungsmethode unter Benutzung des erhaltenen Eingabecodes angewendet wird;
- Die Anzeige des einmaligen Passworts auf einem geeigneten Anzeigegerät des Authentifizierungstoken, damit der Benutzer die Login-Seite des Servers betreten kann;
- Wobei die Abfolge der Codierungszeit von Bildern absichtlich so angeordnet ist, um zu garantieren, dass die entsprechende Lichtausgabe ausreichend ist, damit nach der Konvertierung die Anordnung der besagten Solarzellen und der Energiebedarf generiert werden kann, den die MPU benötigt, um die erforderlichen Aufgaben durchführen zu können.

2. Das Authentifizierungstoken, das für die Methode verwendet wird, die unter Anspruch 1 aufgeführt ist, besteht aus:
- Einer Anordnung von angepassten Solarzellen, um zeitlich bedingte Helligkeitsvariationen der Bildschirmlichtausgabe in ein entsprechend variierendes elektrisches Signal zu konvertieren;
- Einen Schaltkreis für die Decodierung, der angepasst ist, das besagte elektrische Signal in einen Eingabecode zu dekodieren;
- Eine Mikroprozessoreinheit (MPU) mit einem nichtflüchtigen Speicher, der angepasst ist, ein einmaliges Passwort (OTP) zu erhalten, indem ein Verschlüsselungsverfahren angewendet wird oder durch die Anwendung einer OTP-Generierungsmethode, die auf einer OTP-Tabelle basiert und den erhaltenen Eingabecode benutzt;
- Display bedeutet die Anpassung, das besagte einmalige Passwort anzuzeigen;
- Energiespeicherkondensatoren, was bedeutet, dass jede Energie, die die Mikroprozessoreinheit für die Durchführung ihrer erforderlichen Aufgaben benötigt durch die Konvertierung der Lichtausgabe der Solarzellenvariationen im Authentifizierungstoken erhalten wird, der die Form einer Karte hat. Und auf einer Seite der Karte ist eine Anordnung von Solarzellen angebracht, um der Lichtausgabe des Bildschirms mit zeitlich variierender Helligkeit ausgesetzt zu sein.

3. Das Authentifizierungstoken laut Anspruch 2 ist weiter auch **dadurch gekennzeichnet, dass** ein Element der Fotoabtastung auf der gleichen Kartenseite wie die Anordnung der Solarzellen angebracht ist, wobei das besagte Element der Fotoabtastung sich der Aufgabe widmet, die Änderungen des Lichts, die durch das emittierte Bild der zeitveränderlichen Helligkeit entstehen zu entdecken, die Anfragen von einen Server verschlüsseln.

4. Das Authentifizierungstoken laut Anspruch 2 ist auch **dadurch gekennzeichnet, dass** das Fotoabtastungselement aus drei Sensorelementen besteht und sensitiv auf die grundlegenden Farbkomponenten reagiert und jedes sensitiv auf die drei grundlegenden rot-grün-blauen Farbkomponenten reagiert und jedes der fotoabtastenden Elemente die Variationen der entsprechenden Farbkomponente durch das Bild des emittierten Lichts und der zeitlich veränderlichen Helligkeit entdeckt.

5. Das Authentifizierungstoken laut Anspruch 2 - 4 ist auch **dadurch gekennzeichnet, dass** es Benutzeridentifikation zur Identifizierung des Benutzers anwendet, bevor die Karte den OTP-Generierungsprozess startet;

6. Authentifizierungstoken laut Anspruchs 5 ist **dadurch gekennzeichnet, dass** der Benutzer für die Identifizierung biometrische Sensoren benutzt;

7. Das Authentifizierungstoken laut Anspruchs 5 ist auch **dadurch gekennzeichnet, dass** der Benutzer für die Identifizierung eine Tastatur auf der Karte benutzt.

## Revendications

1. Une méthode de transfert optique sans contact des requêtes du serveur à un jeton d'authentification tout en alimentant celui-ci en énergie au moyen de lumière émise par des parties de l'écran ou du moniteur, affichant la dite page de connexion du serveur; **caractérisé en ce que** ledit procédé soit agencé pour pouvoir :
- Effectuer l'envoi d'un code par le serveur au moyen d'une séquence temporelle d'une image lumineuse alternant avec une image sombre, cette dite séquence temporelle codant ledit code comme variation de l'émission de la lumière de l'écran correspondant;
- Utiliser un réseau de cellules photovoltaïques au sein du j eton d'authentification pour pouvoir convertir lesdites variations de lumière émises par l'écran en un signal électrique varié correspondant;
- Décoder le signal électrique varié pour obtenir un code d'accès;
- Utiliser une unité à microprocesseur, UMP incluant aussi une mémoire non volatile, pour l'obtention d'un mot de passe unique, MPU, par l'application d'une méthode d'encryptions ou par l'application d'un procédé de génération du MPU à l'aide du code d'accès obtenu;
- Afficher le dit Mot de passe unique sur un dispositif d'affichage approprié du jeton d'authentification de manière à permettre à l'utilisateur de le saisir sur la page de connexion du serveur;
- De manière à ce que la séquence temporelle de codage d'images soit arrangée de manière à garantir que la génération de lumière correspondante soit suffisante pour générer suite à sa conversion par ledit réseau de cellules photovoltaïques, toute l'énergie nécessaire pour effectuer les tâches requises par l'UMP centrale.

2. Le jeton d'authentification pour prendre part au processus de la revendication n°1, comprenant:
- Un réseau de cellules photovoltaïques adaptées à convertir les variations temporaires de luminosité émises par un écran en un signal électrique variable correspondant,
- Une circuiterie de décodage adaptée au décodage dudit signal électrique variant en un code d'accès,
- Une unité de microprocesseur (UMP) avec une mémoire non volatile adaptée à obtenir un mot de passe unique (MPU) de par l'application d'une méthode d'encryptage ou par l'application d'une méthode de génération de MPU basée sur une charte de MPU utilisant le code d'accès généré,
- Des solutions d'affichage adaptées à afficher ledit mot de passe unique,
- Des condensateurs accumulant l'énergie **caractérisés par le fait que** toute l'énergie requise par l'unité du microprocesseur pour l'exécution de ses tâches requises soit obtenue depuis la conversion des variations de lumière de l'écran par la matrice de cellules photovoltaïques et que ce jeton d'authentification ait la forme d'une carte et que la matrice de cellules photovoltaïques soient montées sur un côté de la carte destiné à être exposé à la lumière temporaire émise par l'écran.

3. De plus, le jeton d'authentification, selon la revendication n°2, est **caractérisé par le fait qu'**un élément photosensible est ajouté au même côté que la matrice de cellules photovoltaïques et ou ledit élément de photosensible est dédié à détecter les variations de lumière émises par l'image temporaire variant en luminosité encodant les requêtes venant d'un serveur.

4. Le jeton d'authentification, selon la revendication n°2 se **caractérise de plus par le fait que** l'élément photosensible est constitué de trois éléments de photorécepteurs, chacun étant sensible à l'une des trois composantes fondamentales des couleurs rouges, vertes et bleues, chacun de ces éléments photorécepteurs détectant les variations des composantes de la couleur correspondant à la lumière émise par l'image a luminosité temporaire variable.

5. Le jeton d'authentification selon les revendications 2 à 4, est en plus **caractérisé en ce qu'**il inclut le moyen d'identifier l'utilisateur de la carte avant d'amorcer le processus de génération du MPU.

6. Le jeton d'authentification, selon la revendication n°5 ou le moyen d'identifier d'utilisateur est accompli par des capteurs biométriques.

7. Le jeton d'authentification, selon la revendication n°5 ou le moyen d'identifier d'utilisateur est accompli par un clavier a même carte.
